Europäisches Patentamt

European Patent Office

Office européen des brevets

(19)

(11) Numéro de publication: **O O18 318**
**B1**

(12) FASCICULE DE BREVET EUROPEEN

(45) Date de publication du fascicule du brevet: **15.02.84**

(51) Int. Cl.³: **C 01 B 13/11**

(21) Numéro de dépôt: **80810095.2**

(22) Date de dépôt: **21.03.80**

(54) Appareil ozoniseur et son utilisation.

(30) Priorité: **02.04.79 CH 3039/79**

(43) Date de publication de la demande:
**29.10.80 Bulletin 80/22**

(45) Mention de la délivrance du brevet:
**15.02.84 Bulletin 84/7**

(84) Etats contractants désignés:
**AT DE FR IT NL SE**

(56) Documents cités:
**US - A - 3 421 999**
**US - A - 3 742 301**

(73) Titulaire: **CBS Biotechnic SA**
**18, quai Maria Belgia**
**CH-1800 Vevey (CH)**

(72) Inventeur: **Sandhaus, Sami, Dr.**
**4, avenue de Provence**
**CH-1007 Lausanne (CH)**
Inventeur: **Bryner, Alex**
**23, route du Stand**
**CH-1260 Nyon (CH)**

(74) Mandataire: **Dietlin, Henri et al,**
**DIETLIN, MOHNHAUPT & Cie 3, quai du Mont-Blanc**
**CH-1201 Genève (CH)**

Courier Press, Leamington Spa, England.

Appareil ozoniseur et son utilisation

La présente invention a pour objet un appareil ozoniseur, particulièrement pour produire des quantités relativement petites d'ozone.

L'ozone est un gaz qui a trouvé dans la technique un certain nombre d'utilisations toutes particulières qui sont dérivées du pouvoir oxydant très fort de l'ozone. Ce gaz est une forme spéciale de l'oxygène (formule $O_2$), et a la formule $O_3$.

Parmi ces utilisations, on mentionnera la désinfection des piscines et de l'eau potable, où l'ozone substitue le chlore ou le fluor; ensuite il est utile dans la technique de chimie pour la préparation de composés oxygénés, par exemple de l'eau oxygénée. Une autre utilisation est la désinfection des appareils, outils et cavités dentaires, telles que plaies et couloirs en vue de l'implantation de prothèses et d'autres traitements par le dentiste, voir par exemple S. Sandhaus, Nouveaux aspects de l'implantologie, Lausanne 1969, p. 235 et suivantes.

Un problème assez gênant lié à l'utilisation de l'ozone est le fait que l'ozone, dû en grande partie à son pouvoir oxydant mais aussi à son instabilité moléculaire — l'ozone étant un composé endothermique — ne peut être stocké. L'ozone à l'état concentré est explosible même à − 120°C. Il est un peu plus stable à l'état dilué mais il se décompose continuellement même en l'absence de catalyseurs. Il n'est donc pas question de fabriquer l'ozone même dilué, de le mettre sous pression en bouteilles et de le commercialiser sous la forme courante utilisée pour les gaz industriels tels que l'oxygène, l'hydrogène, l'acétylène, l'azote, l'argon etc. Il faut plutôt préparer l'ozone en quantité et concentration appropriées juste avant son utilisation.

La seule technique permettant la préparation d'ozone assez facile et propre consiste à faire passer de l'oxygène ou un gaz en contenant (en général l'air) dans un appareil à effluves où le gaz est soumis à des décharges électriques normalement sans lumière ni arc, obtenues normalement à l'aide d'un courant alternatif ayant une tension de plusieurs milliers de volts. L'ozone est produit par l'action des effluves qui sont dues à l'effet corona (qui lui-même est normalement lumineux), mais les effluves (ou "décharges silencieuses") se produisent aussi sans que l'on voie un effet lumineux.

On connaît des appareils permettant la préparation de l'ozone; ils contiennent des récipients et tuyauteries en verre recouverts de matières conductrices de l'électricité entre lesquelles on provoque des effluves. Ces appareils générateurs d'ozone sont appelés ozoniseurs.

Par exemple, le brevet US—A—3 742 301 décrit un générateur corona pour produire de l'ozone sous l'effet d'une tension de 5000 à 10000 volts (il n'est pas spécifié si la tension est continue ou alternative), comprenant un tube en métal enroulé sans mandrin et mis à la terre. A l'intérieur de ce tube se trouve un fil conducteur isolé vis-à-vis du tube. Un autre brevet US—A—3 421 999, montre un générateur d'ozone comprenant un cylindre en verre dans lequel se trouve un cylindre en aluminium formant anode. La cathode, mise à la terre, est constituée par un troisième cylindre coaxial sous forme de grille entourant le cylindre en verre. La haute tension est de 10 000 volts et semble avoir la fréquence du réseau, donc 60 hertz ce qui est la valeur utilisée aux Etats-Unis.

Les ozoniseurs connus ont un nombre de désavantages. Ils sont d'abord relativement encombrants comme on peut se rendre compte au vu de la littérature citée ci-dessus. Un autre désavantage est le fait que l'apparition d'arcs au lieu d'effluves se fait au bout d'un certain temps dû au relâchement des matériaux soumis aux effluves. Ceci peut être déduit immédiatement des deux brevets cités où la haute tension n'est que de 10000 V au maximum; cette valeur relativement basse — le rendement en ozone est alors faible — a dû être choisie afin de retarder l'apparition des arcs.

Si de l'air est utilisé comme gaz de départ, les arcs produisent des oxydes d'azote, gaz très toxiques qui rendent l'ozoniseur inutilisable. Dans les ozoniseurs connus, il se produit une certaine élévation de température, et le rendement de l'appareil se trouve alors réduit. En général, le rendement des ozoniseurs connus est relativement faible et devrait être amélioré.

Le but de l'invention est donc de supprimer ces inconvénients et désavantages et de proposer un appareil ozoniseur simple, peu encombrant, produisant de l'ozone d'une manière réglable en quantité et concentration, ne présentant pas le risque de décharges par arcs donc utilisable avec de l'air, ne demandant pas de grands investissements et étant donc à la portée de la plupart des dentistes, médecins et autres utilisateurs, et travaillant avec un rendement relativement très élevé.

Ces problèmes sont résolus et les buts discutés ci-dessus sont atteints par l'ozoniseur selon l'invention qui est défini dans la revendication indépendante. Des modes d'exécution font l'objet de revendications dépendantes.

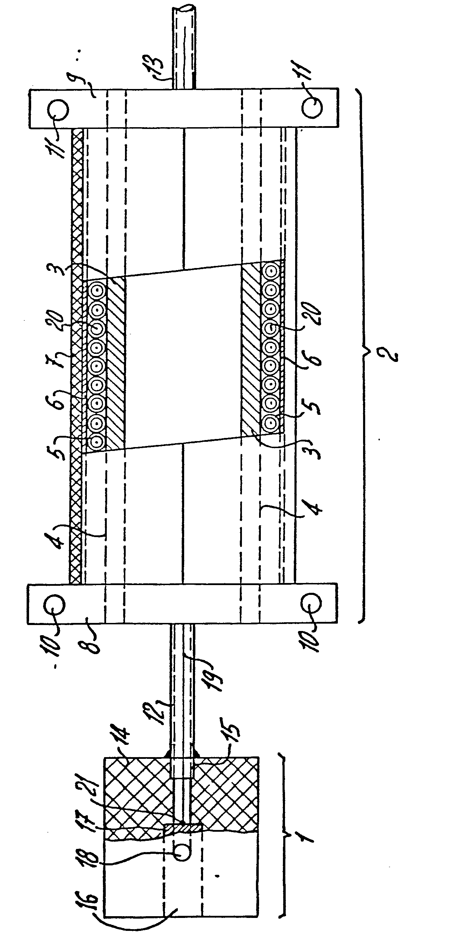

Dans le dessin, on a représenté une vue de coté partiellement découpée, d'un élément actif de l'ozoniseur selon l'invention. Cet élément peut être le seul; il est cependant possible d'arranger plusieurs éléments de ce genre en parallèle ou/et en série.

L'élément représenté à la figure unique à l'échelle 1:1 environ, se compose de deux parties, à savoir la tête 1 et le bloc ozoniseur 2. Le bloc ozoniseur 2 comprend un tube métallique 3. La surface extérieure 4 du tube 3 porte un enroulement en spires jointives d'un tube en verre 5. L'enroulement des spires 5 est recouvert d'une feuille ou grille métallique 6, par

**0018318**

exemple en Al, Cu, Ni, Ag, etc., sous forme d'un cylindre, et la feuille métallique 6 est protégée vers l'extérieur par une couche 7 d'une matière électriquement isolante.

Le tube métallique 3 est serré à ses deux extrémités dans des brides métalliques 8 et 9. Ces brides 8 et 9 se composent de deux demi-coquilles chacune serrées par des tiges filetées introduites dans les alésages 10 et 11.

Le tube en verre 5 qui est enroulé en spires autour du tube métallique 3 entre par un bout axial droit 12 dans la partie centrale du tube en métal 3, et passe par un alésage radial (non représenté) à travers ce tube pour entamer sa première spire. Le tube en verre 5 sort du tube métallique 3 de la même façon, également non représentée, et forme une sortie axiale droite 13.

La tête 1 est un bloc cylindrique 14 en matière électriquement isolante. Le tube en verre est réuni, avec son bout droit 12, au bloc 14; le bout 12 est fixé par collage dans un alésage cylindrique 15 du bloc 14. Au coté opposé à l'alésage 15, le bloc 14 comporte un contre-alésage 16, coaxial au premier alésage 15. Une électrode métallique 17 est insérée dans l'alésage 16. Cette électrode comporte des canaux on représentés qui sont en communication avec un troisième alésage 18 du bloc 14 qui est à angle droit par rapport aux alésages 15 et 16 et qui communique avec les canaux dans l'électrode 17 et le bout de tube 12.

Un fil métallique 19, par exemple en cuivre éventuellement doré, argenté, nickelé, chromé etc., est attaché de façon solide et électriquement conductrice, par exemple par une soudure 21, à l'électrode 17. Ce fil 19 se prolonge dans l'intérieur du tube 12 et des spires du tube 5 (voir le numéro de référence 20) et finit librement dans la sortie 13.

La fabrication du dispositif représenté et décrit est assez simple. On réalise d'abord le tube en métal 2, de préférence en aluminium, avec ses deux ouvertures servant au passage du tube en verre 5. Celui-ci, ayant par exemple des dimensions 3 mm de diamètre à l'intérieur et 5 mm à l'extérieur, est chauffé au chalumeau où il sera enroulé autour du tube métallique 3, de préférence en aluminium, qui supporte ce chauffage; sinon, il peut être refroidi par l'intérieur.

Lorsque le tube en verre est en place, on colle la tête 1 préalablement réalisée sur le bout 12, on fixe les brides 8 et 9 et l'on applique la couche conductrice 6 et la couche isolante 7. Finalement, on soude le fil métallique 19, 20 à l'électrode 17 à l'extérieur du dispositif, on enfile le fil dans le tube en verre, et l'on introduit l'électrode 17 dans son alésage 16 où elle sera fixée. Le fil a par exemple une épaisseur de 0,3 mm.

L'électrode 17 sera connectée à la phase d'un générateur d'impulsions de haute tension non représenté, et les parties métalliques comme le tube 3, la couche 6 et les brides 8 et 9, au zéro et à la terre.

L'appareil qui vient d'être décrit fonctionne comme suit. De l'oxygène ou de l'air, habituellement ce dernier gaz, est envoyé par la tubulure 18 dans la partie 1 du générateur. Ce gaz de départ traverse toutes les spires du tube 5 et sort du générateur par la sortie 13. Le générateur haute tension, raccordé à l'appareil comme décrit, est alors mis en marche et produit des effluves entre le fil 19, 20 et les parties métalliques mises à la terre et zéro, à savoir le tube 3, la couche 6 et les brides 8 et 9, à travers le verre du tube 5. Il se produit donc de l'ozone à partir de l'oxygène circulant dans le tube 5. Le gaz sortant par la sortie 13 est donc ozonisé et peut être directement utilisé.

Dans un exemple, de l'air préalablement filtré dans un filtre à ouate, a été introduit à raison d'environ 6 litres/min dans la tubulure 18, sous pression manométrique de 0,5 bar. Le générateur haute tension utilisé (non représenté) comporte un dispositif multivibrateur générateur d'impulsions rectangulaires et d'un courant moyen de 2 A pouvant cependant atteindre des pointes de 10 A sous 12 V. Les impulsions produites avaient une largeur de 5 ms environ; il s'agit donc d'une onde rectangulaire dont les impulsions et les pauses ont approximativement le même largeur. Ces impulsions ont été envoyées dans l'enroulement primaire d'une bobine du genre bobine d'allumage de voitures, et on a obtenu une tension alternatif de 35000 à 45000 V à une frequence ca de 100 Hz, 20 à 30 W, à la sortie de l'enroulement secondaire.

Cependant, de façon particulièrement préférée, on peut prévoir le refroidissement interne du cylindre 3 par de l'eau qui entre dans le creux de ce cylindre et en sort par des tubulures appropriées (non représentées), constituant ainsi un refroidisseur très simple, commode et efficace.

Aucun echauffement sensible de l'ozoniseur décrit n'a pu être constaté. On a constaté que 30 à 40 % de l''oxygène contenu dans l'air de départ avaient été convertis en ozone. La concentration en oxydes d'azote était négligeable, il n'y avait donc pas de décharges d'arc électrique.

L'appareil décrit, son mode de fabrication et sa mise en action, peuvent être modifiés dans de très larges limites. Par exemple, la concentration d'ozone à la sortie 13 peut être réglée de différentes façons:

(1) augmentation ou diminution de la teneur en $O_2$ du gaz de départ;

(2) recyclage total ou partiel du gaz ozonisé;

(3) augmentation ou réduction du débit et/ou de la pression du gaz ou de la puissance du générateur haute tension.

Un débitmètre peut être placé à sortie 13, et il peut aussi être relié à un interrupteur de sécurité coupant le générateur haute tension lorsque le débit à la sortie devient trop faible ou nul afin d'éviter une surozonisation.

Des variantes possibles touchant la construction sont par exemple les suivantes:

— les spires du tube 5 n'ont pas besoin d'être jointives, et tout l'enroulement n'est pas nécessairement cylindrique;

— la tête 1 peut être reliée par une armature solide à la bride 8 afin de réduire le risque de casser le bout de tube 12;

— le fil droit 19, 20 peut être remplacé par un spiral;

— le tube 5, qui est général en verre, peut également être fait à partir d'une autre matière analogue, étanche et résistant à l'ozone et aux décharges électriques, comme une céramique telle que la porcelaine, ou le quartz.

Les avantages décrits de l'appareil ozoniseur, objet de l'invention, étaient en grande partie surprenants. En général, les appareils connus ont des électrodes plates à surfaces étendues; l'utilisation d'un fil comme électrode de tension n'allait donc pas de soi. En particulier, on pouvait craindre une réduction de rendement et une formation d'arcs entre les électrodes, car il n'est généralement pas possible de centrer le fil 20 dans le tube 5 comme représenté sur le dessin. Mais même avec un fil qui touche la paroi du tube 5, le rendement en ozone était plus grand que prévu, et des arcs ne se sont produits nulle part.

On s'attendait en plus à une chute de tension vers la fin du fil 20, car ce fil forme une bobine (il suit le tube 5) qui présente à un courant alternatif une inductance. Cependant, on n'a pas pu détecter une telle chute de tension; on obtient alors l'avantage que tout l'espace dans le tube 5, jusqu'à la fin du fil 20 dans la tubulure de sortie 13, est un espace d'ozonisation régulier.

**Revendications**

1. Appareil ozoniseur produisant de l'ozone à partir d'un gaz composé au moins partiellement d'oxygène, au moyen des effluves engendrées par un courant pulsé à haute tension, comportant (a) un tube prévu pour la circulation de gaz à ozoniser et réalisé en un matériau électriquement isolant et résistant à l'ozone et aux effluves, formant un enroulement cylindrique; (b) une première électrode sous forme de fil conducteur disposée à l'intérieur dudit tube; et (c) une seconde électrode, à surface étendue, caractérisé en ce que ledit tube est en verre, en quartz ou en céramique, qu'il est enroulé autour d'un mandrin cylindrique en métal, que l'enroulement formé par ledit tube est recouvert par une feuille ou grille en métal posée en couche sensiblement cylindrique sur la surface extérieure des spires formées par le tube enroulé, ce revêtement métallique étant lui-même recouvert par une couche de matière isolante, que le mandrin et ladite feuille ou grille en métal forment la seconde électrode et sont tous les deux mis à terre, et que le fil conducteur est fixé à une électrode d'amenée de tension disposée dans un bloc de matière isolante qui comporte des alésages pour permettre le passage du gaz à ozoniser.

2. Utilisation de l'appareil selon la revendication 1, caractérisée en ce que la haute tension appliquée au fil conducteur est de l'ordre de 35000 à 45000 V, a une fréquence de 100 Hz, est composée d'impulsion d'une durée de 5 millisecondes, et provient par transformation d'une source d'impulsions 100 Hz/5 ms pouvant débiter 2 à 10 A sous 12 V.

3. Appareil selon la revendication 1, caractérisé en ce que le tube enroulé est en verre, et que le mandrin est en aluminium.

4. Appareil selon la revendication 1, caractérisé en ce que la feuille ou grille recouvre toute la surface extérieure du tube enroulé.

5. Appareil selon l'une quelconque des revendications 1, 3 et 4, caractérisé en ce que ledit bloc en matière isolante est relié à un bout de tube droit et axial audit mandrin et le dépasse latéralement, ce bout de tube étant également relié au tube qui est enroulé autour du mandrin.

**Patentansprüche**

1. Apparat zur Herstellung von Ozon aus einem mindestens teilweise aus Sauerstoff bestehenden Gas mittels Glimmentladungen, die durch einen pulsierenden hochgespannten Strom erzeugt werden, mit (a) einem Rohr zum Durchgang des zu ozonisierenden Gases, welches aus einem elektrisch isolierenden und gegenüber Ozon und Glimmentladungen widerstandsfähigen Werkstoff besteht und eine Zylinderwicklung bildet; (b) einem im Rohrinneren angeordneten, eine erste Elektrode bildenden Leitungsdraht; und (c) einer zweiten, grossflächigen Elektrode, dadurch gekennzeichnet, dass das gennante Rohr aus Glas, Quarz oder Keramik besteht und auf einer zylindrischen Metallhülse aufgewickelt ist, dass die Rohrwicklung mit einem Metallblech oder -gitter als im wesentlichen zylindrische Schicht auf der Aussenfläche der von der Rohrwicklung gebildeten Windungen abgedeckt ist, wobei die metallische Abdeckung wiederum mit einer Isolierschicht bedeckt ist, dass die Hülse und das genannte Metallblech bzw. -gitter die zweite Elektrode bilden und geerdet sind, und dass der Leitungsdraht mit einer Spannungszufuhr-Elektrode verbunden ist, welche in einem Isoliermaterialblock angeordnet ist, der Kanäle zum Durchgang des zu ozonisierenden Gases aufweist.

2. Verwendung des Apparates gemäss Anspruch 1, dadurch gekennzeichnet, dass die am Leitungsdraht anliegende Hochspannung grössenordnungsmässig 35 000 bis 45 000 V beträgt und eine Frequenz von 100 Hz aufweist, aus Impulsen mit einer Dauer von 5 Millisekunden besteht und durch Transformation einer Impulsquelle von 100 Hz/5ms, die 2 bis 10 A mit 12 V liefert, erhalten wird.

3. Apparat nach Anspruch 1, dadurch gekennzeichnet, dass das aufgewickelte Rohr aus Glas und die Hülse aus Aluminium besteht.

4. Apparat nach Anspruch 1, dadurch gekennzeichnet, dass das Blech oder Gitter die gesamte Aussenfläche des aufgewickelten Rohrs bedeckt.

5. Apparat nach einem der Ansprüche 1, 3 und 4, dadurch gekennzeichnet, dass der gennante Isoliermaterialblick mit einem geraden, sich axial zur gennanten Hülse erstreckenden, sie seitlich überragenden Endbereich des Rohres verbunden ist, wobei dieser Endbereich andererseits mit dem auf der Hülse aufgewickelten Rohr verbunden ist.

**Claims**

1. Ozonising apparatus for the production of ozone from a gas being at least partially composed of oxygen, by means of glow discharges generated by a pulsed high voltage current, the apparatus comprising (a) a tube for the circulation of the gas to be ozonised, made from an electrically insulating material resistant against ozone and glow discharges, forming a cylindrical winding; (b) as a first electrode, a conducting wire disposed in the interior of said tube; and (c) a second large area electrode, characterized by the fact that the said tube is made of glass, quartz or ceramics, that it is wound on a metallic cylindrical mandrel, that the winding formed by the tube is covered by a metallic sheet or grid as a substantially cylindrical layer on the exterior surface of the spires forming the tube winding, said metallic layer being in turn covered by a layer of insulating material, that the mandrel and said metallic sheet or grid forming the second electrode are both earthed, and that the conducting wire is connected to a voltage feeder electrode disposed within a block of insulating material bearing borings allowing the passage of the gas to be ozonised.

2. Use of the apparatus according to claim 1, characterized by the fact that the high voltage applied to the conducting wire is in the order of 35 000 to 45 000 volts at a frequency of 100 Hertz, that it is composed of pulses having a duration of 5 milliseconds each, and is derived by transformation from a pulse source of 100 Hz/5 ms capable of delivering 2 to 10 amps under 12 volts.

3. Apparatus according to claim 1, characterized by the fact that the wound-up tube is made of glass, and that the mandrel is made of aluminium.

4. Apparatus according to claim 1, characterized by the fact that the sheet or grid covers the whole exterior surface of the wound-up tube.

5. Apparatus according to any one of claims 1, 3 and 4, characterized by the fact that said block of insulating material is connected to a straight end section of the tube extending axially to said mandrel and protruding laterally from it, said tube end section being also connected to the tube which is wound up around the mandrel.